# EUROPEAN PATENT APPLICATION

(11) **EP 4 485 992 A1**
(43) Date of publication of application: **01.01.2025**
(21) Application number: 23773685.5
(22) Date of filing: 16.03.2023
(51) Int. Cl.: H04W 24/08, H04W 24/02

(54) **SELF-TRANSMITTING/SELF-RECEIVING SENSING METHOD AND RELATED PRODUCT**

(30) Priority: 21.03.2022 CN 202210279157
(71) Applicant: Huawei Technologies Co., Ltd., Shenzhen, Guangdong 518129 (CN)
(72) Inventor: DU, Rui, Shenzhen, Guangdong 518129 (CN); HAN, Xiao, Shenzhen, Guangdong 518129 (CN); NAREN, Gerile, Shenzhen, Guangdong 518129 (CN); HU, Mengshi, Shenzhen, Guangdong 518129 (CN); YANG, Xun, Shenzhen, Guangdong 518129 (CN)
(74) Representative: Gill Jennings & Every LLP
(86) International application number: PCT/CN2023/081769
(87) International publication number: WO 2023/179437

(57) **Abstract**

Embodiments of this application disclose a monostatic sensing method and a related product. The method includes: performing monostatic sensing based on a first frame structure, to obtain a first sensing result; receiving a first request frame sent by a second device, where the first request frame is used to request to obtain a monostatic sensing result; sending a first response frame to the second device based on the first request frame, where the first response frame includes the first sensing result. This application is implemented, so that the monostatic sensing result of the device can be fully used.

## Description

This application claims priority to Chinese Patent Application No. 202210279157.7, filed with the China National Intellectual Property Administration on March 21, 2022 and entitled "MONOSTATIC SENSING METHOD AND RELATED PRODUCT", which is incorporated herein by reference in its entirety.

### TECHNICAL FIELD

This application relates to the communication field, and in particular, to a monostatic sensing method and a related product.

### BACKGROUND

Wireless local area network (wireless local area network, WLAN) sensing (WLAN sensing) is a technology with broad application prospects. The WLAN sensing is to sense surrounding environments by using a radio frequency (radio frequency, RF) signal sent by a WLAN device, and extract corresponding parameters in a received signal for analysis according to a specific algorithm, to obtain related information about the surrounding environments. Monostatic sensing means that a same device is used for signal transmission and signal reception. Because both signal transmission and signal reception are performed by the same device, better (time and frequency) synchronization can be achieved, and sensing performance is good. Therefore, it is necessary to study how to make full use of a sensing result of the monostatic sensing.

### SUMMARY

Embodiments of this application disclose a monostatic sensing method and a related product, to share a sensing result of monostatic sensing performed by a first device, so as to make full use of the monostatic sensing result of the device.

According to a first aspect, an embodiment of this application provides a monostatic sensing method applied to a first device. The method includes:
performing monostatic sensing based on a first frame structure, to obtain a first sensing result;
receiving a first request frame sent by a second device, where the first request frame is used to request to obtain a monostatic sensing result; and
sending a first response frame to the second device based on the first request frame, where the first response frame includes the first sensing result.

In this embodiment of this application, the first device performs monostatic sensing to obtain the first sensing result, and shares the first sensing result with the second device that requests to obtain the monostatic sensing result, to make full use of the sensing result of monostatic sensing performed by the device.

In a possible implementation, if the first device is a personal basic service set control point or an access point, the first frame structure includes one of the following: a DMG beacon frame, a data frame, or a beam refinement protocol (beam refinement protocol, BRP) frame; or
if the first device is a station, the first frame structure includes one of the following: a sector sweep SSW, a short SSW, a BRP, or a data frame.

According to this embodiment, monostatic sensing may be implemented by using a plurality of types of frame structures.

In a possible implementation, the method further includes:
receiving first information and second information sent by the second device, where the first information is used to request the first device to perform monostatic sensing, the second information is used to request to obtain target beam information and target location information, the target beam information is beam information for sending the first frame structure by the first device, and the target location information is information about a location of the first device for sending the first frame structure;
sending the target beam information and the target location information to the second device based on the second information; and
the performing monostatic sensing based on a first frame structure, to obtain a first sensing result includes:
   performing monostatic sensing based on the first information and the first frame structure, to obtain the first sensing result.

According to this embodiment, the first device sends the location information and beam sending information to the second device, which can be used to simultaneously interpret results of both passive sensing and monostatic sensing. In this way, sensing efficiency is improved. In addition, passive sensing and monostatic sensing are performed based on a same frame structure, so that sensing performance is improved.

In a possible implementation, the first information and the second information are separately included in different elements of an information request frame; or
the first information and the second information are separately included in different request frames; or
the first information and the second information are included in a passive sensing information element of an information request frame.

In a possible implementation, the method further includes:
sending third information and fourth information, where the third information is used to announce that the first device has a monostatic sensing capability, and the fourth information is used to announce that the first device has a passive sensing capability.

According to this embodiment, passive sensing and monostatic sensing may be implemented in a same procedure.

In a possible implementation, the third information and the fourth information are included in a second frame structure; and
if the first device is the personal basic service set control point or the access point, the second frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the second frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

In a possible implementation, the method further includes:
sending fifth information, where the fifth information is used to announce that the first device performs monostatic sensing based on the first frame structure.

According to this embodiment, the first device may actively initiate a monostatic sensing procedure, and does not need to be bound to passive sensing, so that usage is flexible.

In a possible implementation, if the first device is the personal basic service set control point or the access point, the first frame structure is a DMG beacon frame in a current or next BTI, or the first frame structure is a data frame in a current or next data transmission interval (data transmission interval, DTI), or the first frame structure is a BRP in a current or next DTI; or
if the first device is the station, the first frame structure is an SSW or a short SSW in current or next association beamforming training (association beamforming training, A-BFT), or the first frame structure is a data frame in a current or next DTI, or the first frame structure is a BRP in a current or next DTI.

In a possible implementation, the fifth information is included in a third frame structure; and
if the first device is the personal basic service set control point or the access point, the third frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the third frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

In a possible implementation, the first request frame is further used to request to obtain target beam information and target location information, the target beam information is beam information for sending the first frame structure by the first device, the target location information is information about a location of the first device for sending the first frame structure, and the method further includes:
sending the target beam information and the target location information to the second device based on the first request frame.

According to this embodiment, both the target beam information and the target location information may be requested by using a same request frame, and monostatic sensing may be requested, so that transmission resources are saved.

In a possible implementation, the method further includes:
receiving a second request frame sent by the first device, where the second request frame is used to request to obtain target beam information and target location information, the target beam information is beam information for sending the first frame structure by the first device, and the target location information is information about a location of the first device for sending the first frame structure; and
sending the target beam information and the target location information to the second device based on the second request frame.

According to this embodiment, the information and the monostatic sensing behavior may be requested by using different request frames.

According to a second aspect, an embodiment of this application provides a monostatic sensing method applied to a second device. The method includes:
sending a first request frame to a first device, where the first request frame is used to request to obtain a monostatic sensing result; and
receiving a first response frame sent by the first device, where the first response frame includes a first sensing result of monostatic sensing performed by the first device based on a first frame structure.

In a possible implementation, if the first device is a personal basic service set control point or an access point, the first frame structure includes one of the following: a DMG beacon frame, a data frame, or a beam refinement protocol BRP; or
if the first device is a station, the first frame structure includes one of the following: a sector sweep SSW, a short SSW, a BRP, or a data frame.

In a possible implementation, the method further includes:
sending first information and second information to the first device, where the first information is used to request the first device to perform monostatic sensing, the second information is used to request to obtain target beam information and target location information, the target beam information is beam information for sending the first frame structure by the first device, and the target location information is information about a location of the first device for sending the first frame structure;
receiving the target beam information and the target location information that are sent by the first device;
performing passive sensing based on the first frame structure, the target beam information, and the target location information; and
parsing the first sensing result based on the target beam information and the target location information.

In a possible implementation, the method further includes:
receiving third information and fourth information that are sent by the first device, where the third information is used to announce that the first device has a capability of monostatic sensing based on the first frame structure, and the fourth information is used to announce that the first device has a capability of passive sensing based on the first frame structure;
sending the first information to the first device based on the third information; and
sending the second information to the first device based on the third information and/or the fourth information.

In a possible implementation, the third information and the fourth information are included in a second frame structure; and
if the first device is the personal basic service set control point or the access point, the second frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the second frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

In a possible implementation, the method further includes:
receiving fifth information sent by the first device, where the fifth information is used to announce that the first device performs monostatic sensing based on the first frame structure; and
the sending a first request frame to a first device includes:
   sending the first request frame to the first device based on the fifth information.

In a possible implementation, if the first device is the personal basic service set control point or the access point, the first frame structure is a DMG beacon frame in a current or next beacon transmission interval (beacon transmission interval, BTI), or the first frame structure is a data frame in a current or next DTI, or the first frame structure is a BRP in a current or next DTI; or
if the first device is the station, the first frame structure is an SSW or a short SSW in current or next A-BFT, or the first frame structure is a data frame in a current or next DTI, or the first frame structure is a BRP in a current or next DTI.

In a possible implementation, the fifth information is included in a third frame structure; and
if the first device is the personal basic service set control point or the access point, the third frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the third frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

In a possible implementation, the first request frame is further used to request to obtain target beam information and target location information, the target beam information is beam information for sending the first frame structure by the first device, the target location information is information about a location of the first device for sending the first frame structure, and the method further includes:
receiving the target beam information and the target location information that are sent by the first device; and
parsing the first sensing result based on the target beam information and the target location information.

In a possible implementation, the method further includes:
sending a second request frame to the first device, where the second request frame is used to request to obtain target beam information and target location information, the target beam information is beam information for sending the first frame structure by the first device, and the target location information is information about a location of the first device for sending the first frame structure;
receiving the target beam information and the target location information that are sent by the first device; and
parsing the first sensing result based on the target beam information and the target location information.

According to a third aspect, an embodiment of this application provides a communication apparatus, where the communication apparatus is applied to a first device. The apparatus includes:
a processing module, configured to perform monostatic sensing based on a first frame structure, to obtain a first sensing result; and
a transceiver module, configured to receive a first request frame sent by the second device, where the first request frame is used to request to obtain a monostatic sensing result, where
the transceiver module is further configured to send a first response frame to the second device based on the first request frame, where the first response frame includes the first sensing result.

In a possible implementation, if the first device is a personal basic service set control point or an access point, the first frame structure includes one of the following: a DMG beacon frame, a data frame, or a beam refinement protocol BRP; or
if the first device is a station, the first frame structure includes one of the following: a sector sweep SSW, a short SSW, a BRP, or a data frame.

In a possible implementation, the transceiver module is further configured to receive first information and second information sent by the second device, where the first information is used to request the first device to perform monostatic sensing, the second information is used to request to obtain target beam information and target location information, the target beam information is beam information for sending the first frame structure by the first device, and the target location information is information about a location of the first device for sending the first frame structure;
the transceiver module is further configured to send the target beam information and the target location information to the second device based on the second information; and
the processing module is specifically configured to perform monostatic sensing based on the first information and the first frame structure, to obtain the first sensing result.

In a possible implementation, the first information and the second information are separately included in different elements of an information request frame; or
the first information and the second information are separately included in different request frames; or
the first information and the second information are included in a passive sensing information element of an information request frame.

In a possible implementation, the transceiver module is further configured to send third information and fourth information, where the third information is used to announce that the first device has a monostatic sensing capability, and the fourth information is used to announce that the first device has a passive sensing capability.

In a possible implementation, the third information and the fourth information are included in a second frame structure; and
if the first device is the personal basic service set control point or the access point, the second frame structure is one or more of the following: an association request frame, an association response frame, a reassociation request frame, a reassociation response frame, a DMG beacon frame, an information request frame, a probe request frame, a probe response frame, an information response frame, or a data frame; or
if the first device is the station, the second frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

In a possible implementation, the transceiver module is further configured to send fifth information, where the fifth information is used to announce that the first device performs monostatic sensing based on the first frame structure.

In a possible implementation, if the first device is the personal basic service set control point or the access point, the first frame structure is a DMG beacon frame in a current or next BTI, or the first frame structure is a data frame in a current or next DTI, or the first frame structure is a BRP in a current or next DTI; or
if the first device is the station, the first frame structure is an SSW or a short SSW in current or next A-BFT, or the first frame structure is a data frame in a current or next DTI, or the first frame structure is a BRP in a current or next DTI.

In a possible implementation, the fifth information is included in a third frame structure; and
if the first device is the personal basic service set control point or the access point, the third frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the third frame structure is one or more of the following: an association request frame, an association response frame, a reassociation request frame, a reassociation response frame, an information request frame, an information response frame, an SSW frame, a probe request frame, a probe response frame, a short SSW frame, or a data frame.

In a possible implementation, the first request frame is further used to request to obtain target beam information and target location information, the target beam information is beam information for sending the first frame structure by the first device, the target location information is information about a location of the first device for sending the first frame structure; and
the transceiver module is further configured to send the target beam information and the target location information to the second device based on the first request frame.

In a possible implementation, the transceiver module is further configured to receive a second request frame sent by the first device, where the second request frame is used to request to obtain target beam information and target location information, the target beam information is beam information for sending the first frame structure by the first device, and the target location information is information about a location of the first device for sending the first frame structure; and
the transceiver module is further configured to send the target beam information and the target location information to the second device based on the second request frame.

According to a fourth aspect, an embodiment of this application provides a communication apparatus, where the communication apparatus is applied to a second device. The apparatus includes:
a processing module, configured to generate a first request frame, where the first request frame is used to request to obtain a monostatic sensing result; and
a transceiver module, configured to send the first request frame to the first device, where the first request frame is used to request to obtain the monostatic sensing result, where
the transceiver module is further configured to receive a first response frame sent by the first device, where the first response frame includes a first sensing result of monostatic sensing performed by the first device based on a first frame structure.

In a possible implementation, if the first device is a personal basic service set control point or an access point, the first frame structure includes one of the following: a DMG beacon frame, a data frame, or a beam refinement protocol BRP; or
if the first device is a station, the first frame structure includes one of the following: a sector sweep SSW, a short SSW, a BRP, or a data frame.

In a possible implementation, the transceiver module is further configured to send first information and second information to the first device, where the first information is used to request the first device to perform monostatic sensing, the second information is used to request to obtain target beam information and target location information, the target beam information is beam information for sending the first frame structure by the first device, and the target location information is information about a location of the first device for sending the first frame structure;
the transceiver module is further configured to receive the target beam information and the target location information that are sent by the first device;
the processing module is further configured to perform passive sensing based on the first frame structure, the target beam information, and the target location information; and
the processing module is further configured to parse the first sensing result based on the target beam information and the target location information.

In a possible implementation, the transceiver module is further configured to receive third information and fourth information that are sent by the first device, where the third information is used to announce that the first device has a capability of monostatic sensing based on the first frame structure, and the fourth information is used to announce that the first device has a capability of passive sensing based on the first frame structure.

In a possible implementation, the transceiver module is further configured to send the first information to the first device based on the third information; and
the transceiver module is further configured to send the second information to the first device based on the third information and/or the fourth information.

In a possible implementation, the third information and the fourth information are included in a second frame structure; and
if the first device is the personal basic service set control point or the access point, the second frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the second frame structure is one or more of the following: an association request frame, an association response frame, a reassociation request frame, a reassociation response frame, an information request frame, an information response frame, an SSW frame, a probe request frame, a probe response frame, a short SSW frame, or a data frame.

In a possible implementation, the transceiver module is further configured to receive fifth information sent by the first device, where the fifth information is used to announce that the first device performs monostatic sensing based on the first frame structure.

In a possible implementation, the transceiver module is specifically configured to send the first request frame to the first device based on the fifth information.

In a possible implementation, if the first device is the personal basic service set control point or the access point, the first frame structure is a DMG beacon frame in a current or next BTI, or the first frame structure is a data frame in a current or next DTI, or the first frame structure is a BRP in a current or next DTI; or
if the first device is the station, the first frame structure is an SSW or a short SSW in current or next A-BFT, or the first frame structure is a data frame in a current or next DTI, or the first frame structure is a BRP in a current or next DTI.

In a possible implementation, the fifth information is included in a third frame structure; and
if the first device is the personal basic service set control point or the access point, the third frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the third frame structure is one or more of the following: an association request frame, an association response frame, a reassociation request frame, a reassociation response frame, an information request frame, an information response frame, an SSW frame, a short SSW frame, a probe request frame, a probe response frame, or a data frame.

In a possible implementation, the first request frame is further used to request to obtain target beam information and target location information, the target beam information is beam information for sending the first frame structure by the first device, the target location information is information about a location of the first device for sending the first frame structure;
the transceiver module is further configured to receive the target beam information and the target location information that are sent by the first device; and
the processing module is further configured to parse the first sensing result based on the target beam information and the target location information.

In a possible implementation, the transceiver module is further configured to send a second request frame to the first device, where the second request frame is used to request to obtain target beam information and target location information, the target beam information is beam information for sending the first frame structure by the first device, and the target location information is information about a location of the first device for sending the first frame structure;
the transceiver module is further configured to receive the target beam information and the target location information that are sent by the first device; and
the processing module is further configured to parse the first sensing result based on the target beam information and the target location information.

According to a fifth aspect, an embodiment of this application provides a communication apparatus, where the communication apparatus includes a processor, configured to perform the method according to the first aspect, the second aspect, or any possible implementation of the first aspect and the second aspect.

In a process of performing the foregoing methods, a process of information sending and a process of information reception in the foregoing methods may be understood as a process of outputting the information by the processor and a process of receiving the input information by the processor. When outputting the information, the processor outputs the information to a transceiver, so that the transceiver transmits the information. After the information is output by the processor, other processing may further need to be performed on the information before the information arrives at the transceiver. Similarly, during reception of the input information by the processor, the transceiver receives the information, and inputs the information to the processor. Further, after the transceiver receives the foregoing information, other processing may need to be performed on the information before the information is input into the processor.

Based on the foregoing principle, for example, the sending request frame mentioned in the foregoing method may be understood as outputting the request frame by the processor. For another example, receiving the response frame may be understood as receiving the input response frame by the processor.

Unless otherwise specified, operations such as transmission, sending, and reception related to the processor may be more generally understood as operations such as output, reception, and input of the processor if the operations do not conflict with actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to send a request frame. For another example, the transceiver may be further configured to receive a response frame and the like.

In this embodiment of this application, the communication apparatus may be the first device or the second device in the first aspect or the second aspect.

According to a sixth aspect, an embodiment of this application provides a communication apparatus, where the communication apparatus includes a processing circuit and an interface circuit, the interface circuit is configured to obtain data or output data, and the processing circuit is configured to perform the corresponding method according to the first aspect or any possible implementation of the first aspect, or the processing circuit is configured to perform the corresponding method according to the second aspect or any possible implementation of the second aspect.

According to a seventh aspect, an embodiment of this application provides a computer-readable storage medium, where the computer-readable storage medium is configured to store a computer program, and when the computer program is run on a computer, the computer is enabled to perform the method according to the first aspect, the second aspect, or any possible implementation.

According to an eighth aspect, an embodiment of this application provides a computer program product, where the computer program product includes a computer program or computer code, and when the computer program product runs on a computer, the method according to the first aspect, the second aspect, or any possible implementation is performed.

According to a ninth aspect, an embodiment of this application provides a communication system, where the communication system includes a first device and a second device. Optionally, the first device is configured to perform the method according to the first aspect or any possible implementation of the first aspect, and the second device is configured to perform the method according to the second aspect or any possible implementation of the second aspect.

### BRIEF DESCRIPTION OF DRAWINGS

To describe technical solutions in embodiments of this application or in the background more clearly, the following describes accompanying drawings for describing embodiments of this application or the background.
FIG. 1 is a diagram of a communication system according to an embodiment of this application;
FIG. 2 is a diagram of a structure of a beacon interval according to an embodiment of this application;
FIG. 3 is a flowchart diagram of a monostatic sensing method according to an embodiment of this application;
FIG. 4 is a flowchart diagram of another monostatic sensing method according to an embodiment of this application;
FIG. 5a to FIG. 5j are diagrams of a field structure according to an embodiment of this application;
FIG. 6 is a flowchart diagram of still another monostatic sensing method according to an embodiment of this application;
FIG. 7a to FIG. 7c are diagrams of a field structure according to an embodiment of this application; and
FIG. 8 to FIG. 10 are diagrams of structures of communication apparatuses according to embodiments of this application.

### DESCRIPTION OF EMBODIMENTS

Terms "first", "second", and the like in the specification, claims, and accompanying drawings of this application are merely used to distinguish between different objects, and are not used to describe a specific order. In addition, the terms "include", "have", and any variant thereof are intended to cover non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" mentioned in the specification means that specific features, structures, or characteristics described in combination with the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiment described herein may be combined with another embodiment.

Terms used in the following embodiments of this application are merely intended to describe specific embodiments, but are not intended to limit this application. The terms "a", "one", "the foregoing", "this", "such a", and "the one" of singular forms used in this specification and the appended claims of this application are also intended to include plural expressions, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "at least one" used in this application means one or more, and the term "a plurality of" means two or more. "At least one of the following items (pieces)" or a similar expression thereof refers to any combination of these items, including any combination of singular items (pieces) or plural items (pieces). For example, at least one item (piece) of a, b, and c may indicate a, or b, or c, or a and b, or a and c, or b and c, or a, b, and c. Each of a, b, and c may be in a singular form or a plural form.

The technical solutions according to embodiments of this application are clearly and completely described in the following embodiments of this application with reference to accompanying drawings.

For ease of understanding the technical solutions in embodiments of this application, the following describes a system architecture and/or an application scenario of a monostatic sensing method provided in embodiments of this application. It may be understood that scenarios described in embodiments of this application are intended to describe the technical solutions in embodiments of this application more clearly, and do not constitute a limitation on the technical solutions provided in embodiments of this application.

An embodiment of this application provides a monostatic sensing method that may be applied to a wireless communication system. The wireless communication system may be a wireless local area network or a cellular network. The method may be implemented by a communication device in the wireless communication system or a chip or a processor in the communication device. The communication device may be a personal basic service set control point (PBSS control point, PCP), an access point (access point, AP) device, or a station (station, STA) device.

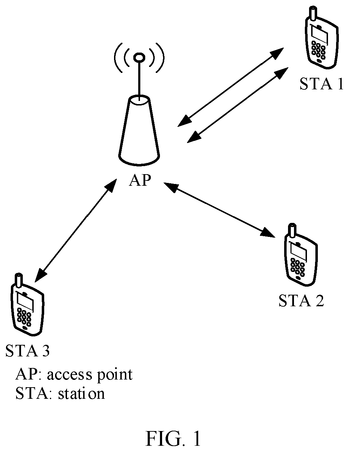

FIG. 1 is a diagram of a system architecture according to an embodiment of this application. As shown in FIG. 1, the system architecture includes at least two WLAN devices (for example, one AP and three STAs are included in FIG. 1). One WLAN device (for example, a STA) may perform monostatic sensing, and another WLAN device (for example, an AP) requests a sensing result from the WLAN device that performs monostatic sensing. The WLAN device may support a WLAN communication protocol.

In this application, an apparatus for implementing the method in this application may be a PCP/AP or a STA in a WLAN, or a chip or a processing system installed in the PCP/AP or the STA.

The PCP/AP is an apparatus having a wireless communication function, supports communication according to a WLAN protocol, and has a function of communicating with another device (for example, a station or another access point) in the WLAN. The PCP/AP may further have a function of communicating with another device. In a WLAN system, an access point may be referred to as an access point station (AP STA). The apparatus having the wireless communication function may be an entire device, or may be a chip, a processing system, or the like installed in the entire device. The device on which the chip or the processing system is installed may implement a method and function in embodiments of this application under control of the chip or the processing system. The PCP/AP in embodiments of this application is an apparatus providing a service for the STA, and supports the 802.11 series protocols. For example, the AP may be a communication entity like a communication server, a router, a switch, or a network bridge. The PCP/AP may include a macro base station, a micro base station, a relay station, or the like in various forms. The PCP/AP may alternatively be a chip and a processing system in these devices in various forms, to implement the method and function in embodiments of this application.

A station STA is an apparatus having a wireless communication function, supports communication according to a WLAN protocol, and has a capability of communicating with another station or an access point in a WLAN network. In the WLAN system, a station may be referred to as a non-access point station (non-access point station, non-AP STA). For example, the STA is any user communication device that allows a user to communicate with the PCP/AP to implement communication with the WLAN. The apparatus may be an entire device, or may be a chip, a processing system, or the like installed in the entire device. The device on which the chip or the processing system is installed may implement the method and function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone. Alternatively, the STA may be an internet of things node in the internet of things, a vehicle-mounted communication apparatus in the internet of vehicles, an entertainment device, a game device or system, a global positioning system device, or the like. The STA may alternatively be a chip or a processing system in the foregoing terminals.

The following first describes terms and technical features in embodiments of this application.

### 1. 802.11bf

IEEE 802.11bf is a next-generation wireless standard that focuses on sensing of a passive object (that is, a target does not carry any device). According to 11bf, based on a received signal, corresponding parameters (such as a speed, a distance, and an angle) of the target are estimated and a subsequent action/behavior is recognized. 802. 11bf includes two main types of standards: a standard for a low frequency (sub-7 GHz, where implementation of the standard is mainly based on 11ac, 11ax, 11be, a next-generation standard, and the like) and a standard for a high frequency (60 GHz, where implementation of the standard is mainly based on 11ad, 11ay, a next-generation standard, and the like). The technical solutions of this application are applicable to the high frequency (11ad/DMG and 11ay/EDMG), or applicable to the low frequency (the standard corresponding to sub-7 GHz).

Because attenuation of a high-frequency electromagnetic wave is higher, in an existing high-frequency standard DMG/EDMG, a directional beam is usually used for sending and reception. This is a huge difference between the high-frequency standard and the standard of the low-frequency sub-7 GHz. However, compared with the low frequency, the high frequency has a larger bandwidth, a higher carrier frequency, and better sensing performance. For directional sending, some angle information may be provided, and interference may be reduced to some extent. This helps improve sensing performance.

In the high frequency (11ad, 11ay) in 802.11bf, monostatic (monostatic), bistatic (bistatic), and multistatic (multistatic) sensing modes are supported.

The monostatic mode is a sensing mode in which a same device is used for transmission and reception. In this mode, both transmission and reception are performed by a same device. Therefore, better (time and frequency) synchronization can be achieved, and sensing performance is good.

The bistatic mode is a sensing mode in which transmission and reception are separated, and may also be referred to as passive sensing. That is, transmission and reception are performed by two devices that operate independently. In this mode, transmission and the reception are not performed by a same device, and sensing performance may be potentially affected (by asynchronization).

The multistatic mode is a sensing mode that includes one transmitter/multiple transmitters and multiple receivers, or includes multiple transmitters and one receiver/multiple receivers. In this mode, a plurality of devices operate together. That is, this mode is a hybrid operating mode including a plurality of monostatic modes/bistatic modes.

### 2. Beacon interval (beacon interval, BI) in 802.11ad/ay

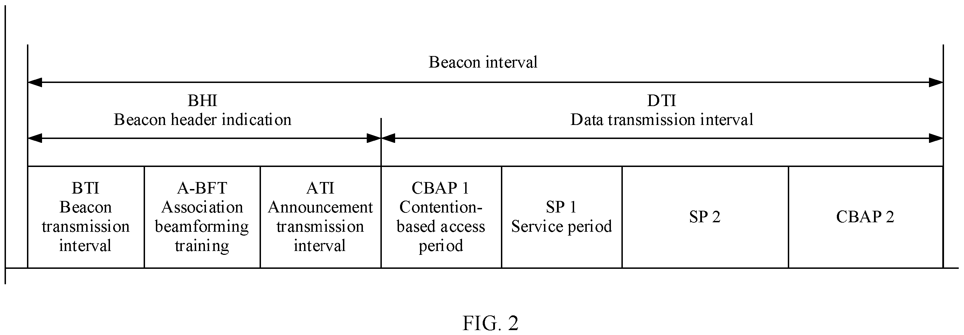

In 802. 11ad/ay, a time axis is divided into BIs. FIG. 2 is a diagram of a structure of a beacon interval BI. As shown in FIG. 2, the beacon interval is divided into a beacon header indication (beacon header indication, BHI) and a data transmission interval (data transmission interval, DTI). The BHI further includes a beacon transmission interval (beacon transmission interval, BTI), an association beamforming training (association beamforming training, A-BFT) interval, and an announcement transmission interval (announcement transmission interval, ATI).

Specifically, a PCP/AP sends a plurality of beacon (beacon) frames in the BTI based on a sector number. The beacon frames are used for downlink sector sweep. A-BFT is used by a STA for association and uplink sector sweep. An ATI is used by the PCP/AP to poll the STA for buffered data information and allocate a resource in the data transmission interval (data transmission interval, DTI) to the STA. The entire DTI is divided into several subintervals, and the subintervals are divided into a contention-based access period (contention-based access period, CBAP) and a service period (service period, SP) based on an access manner. In the service period, transmission scheduling is performed without contention.

### 3. DMG beacon-based passive sensing

An AP first carries a sensing short capability element in a beacon. This indicates that the AP supports passive sensing. If a STA in an environment is to use, for sensing, beacon information sent by the AP, the STA may send an information request frame to the AP, to request the AP to send information related to the beacon. The AP sends sending information (such as a sending time and a sending beam direction) of the beacon to the STA by using an information response frame. The STA may receive, by using the information, the beacon sent by the AP, and perform passive sensing based on the sending information of the beacon.

### 4. SSW frame and short SSW frame

Beam training in 802.11ad is mainly performed during association beamforming training (Association BFT, A-BFT). First, in a BTI phase, a PCP/AP sends a beacon frame in each direction. An A-BFT length field in the frame indicates a total slot length of an A-BFT phase. STAs receiving the frame randomly select a slot from [0, A-BFT Length-1] in a next A-BFT phase for access, and then sequentially send SSW frames through directional antennas (that is, RXSS). In this case, the PCP/AP uses a quasi-omnidirectional antenna to receive beams from all directions and records optimal transmission beams of the STAs. Subsequently, in a sector sweep feedback (SSW Feedback) phase, the PCP/AP feeds back training information of the previous phase (RSS) to the STAs through directional beams. The feedback information is an initiator transmit sector list obtained through sorting by sector quality, and includes an optimal sector of a responder in the previous phase. In this case, the responder is in a quasi-omnidirectional reception mode. A sector sweep acknowledgment (SSW ACK) phase is the final phase. The SSW ACK phase may not exist when SLS is performed before a data transmission phase (DTI), but the SSW ACK phase is required when SLS is performed in the DTI phase. In the SSW ACK phase, the STAs feed back a responder transmit sector list obtained through sorting by quality.

In addition, to meet access training requirements of more users, an EDGM STA type is added to 802.11ay. A difference between the EDGM STA type in 802.1 1ay and a conventional DGM STA in 802.11ad lies in that the EDGM STA can transmit both an SSW frame and a short SSW frame in an A-BFT slot planned in an A-BFT phase. Compared with the SSW frame, the short SSW frame has a shorter frame length, so that the EDGM STA can transmit more data in one slot.

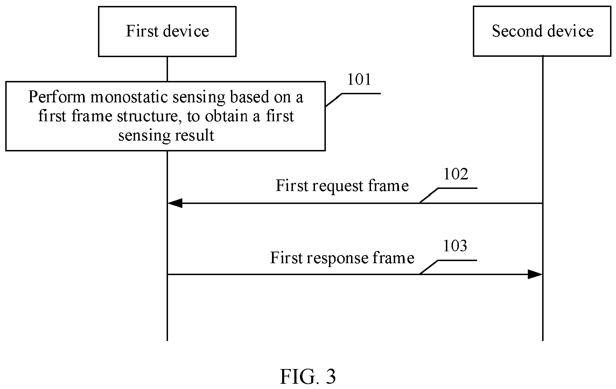

FIG. 3 is a flowchart diagram of a monostatic sensing method according to an embodiment of this application. The monostatic sensing method may be applied to the communication system shown in FIG. 1. A first device may be the PCP/AP shown in FIG. 1, or the first device may be the STA shown in FIG. 1. As shown in FIG. 1, the method includes the following steps.

101: The first device performs monostatic sensing based on a first frame structure, to obtain a first sensing result.

102: A second device sends a first request frame to the first device, where the first request frame is used to request to obtain a monostatic sensing result, and correspondingly, the first device receives the first request frame.

103: The first device sends a first response frame to the second device based on the first request frame, where the first response frame includes the first sensing result. Correspondingly, the second device receives the first response frame.

The first device may be the PCP/AP or the STA. If the first device is the PCP/AP, the first frame structure includes one of the following: a DMG beacon frame, a data frame, or a BRP. If the first device is the STA, the first frame structure is one of the following: a sector sweep SSW, a short SSW, a BRP, or a data frame. A training field (training field, TRN) may be carried at the end of the first frame structure, and sensing is facilitated because the TRN is used for sweep.

For example, when the PCP/AP has a monostatic sensing capability, the PCP/AP may perform monostatic sensing based on the DMG beacon frame, the data frame, or the BRP, to obtain the first sensing result. When the STA has the monostatic sensing capability, the STA may perform monostatic sensing based on the SSW, the short SSW, the data frame, or the BRP, to obtain the first sensing result.

In a possible design, the first device may perform, to obtain the first sensing result, monostatic sensing based on the first frame structure sent by the first device, and send the first sensing result to the second device. To be specific, optionally, the second device may request, by using the first request frame, to obtain the monostatic sensing result from the first device, and the first device sends the first sensing result to the second device by using the first response frame. Optionally, the first request frame may be a DMG sensing poll frame or an information request frame. Further, the second device may perform passive sensing based on the first frame structure sent by the first device. The second device may request, from the first device, target beam information for sending the first frame structure by the first device and information about a target location of the first device for sending the first frame structure. The target beam information includes but is not limited to a horizontal beam direction, a vertical direction, a horizontal beam width, a vertical beam width, a beam gain, and other information. The target location information includes but is not limited to information about an orientation posture of the first device for sending the first frame structure. It should be noted that the location information may be location coordinates determined by using the first device as an origin of coordinates or by using other coordinates as an origin of coordinates. Correspondingly, the first device sends the target beam information and the target location information to the second device. The second device may not only perform passive sensing based on the first frame structure, the target beam information, and the target location information, but also parse or interpret the obtained first sensing result by using the target beam information and the target location information, to implement passive sensing and monostatic sensing based on a same procedure. In this way, sensing efficiency is improved, and repeated transmission of the beam information and the location information is avoided. Further, the second device may further perform comprehensive sensing based on the monostatic sensing result and a passive sensing result that are sent by the first device. In this way, sensing diversity gains at a same moment are increased and sensing performance improved.

In another possible design, the first device may announce that monostatic sensing is to be performed based on the first frame structure, and the second device may request, by using the first request frame, the first sensing result of monostatic sensing from the first device. Optionally, the first request frame may be the DMG sensing poll frame. To be specific, optionally, if the first device is the PCP or the AP, the first frame structure may be a DMG beacon frame in a current or next BTI. That is, the PCP or the AP announces that monostatic sensing is being performed based on the DMG beacon frame in the current BTI, or monostatic sensing is to be performed based on the DMG beacon frame in the next BTI. After the current or next BTI ends, the STA may request, from the PCP or the AP, the first sensing result of performed monostatic sensing. The first frame structure may alternatively be a data frame in a current or next DTI. That is, the PCP or the AP announces that monostatic sensing is being performed based on the data frame in the current DTI, or monostatic sensing is to be performed based on the data frame in the next DTI. After the current or next DTI ends, the STA may request, from the PCP or the AP, the first sensing result of performed monostatic sensing. The first frame structure may alternatively be a BRP in a current or next DTI. That is, the PCP or the AP announces that monostatic sensing is being performed based on the BRP in the current DTI, or monostatic sensing is to be performed based on the BRP in the next DTI. After the current or next DTI ends, the STA may request, from the PCP or the AP, the first sensing result of performed monostatic sensing.

If the first device is the STA, the first frame structure may be an SSW or a short SSW in current or next A-BFT. That is, the STA announces that monostatic sensing is being performed based on the SSW or the short SSW in the currentA-BFT, or monostatic sensing is to be performed based on the SSW or the short SSW in the next A-BFT. After the current or next A-BFT ends, the PCP or the AP may request, from the STA, the first sensing result of performed monostatic sensing. The first frame structure may alternatively be a data frame in a current or next DTI. That is, the STA announces that monostatic sensing is being performed based on the data frame in the current DTI, or monostatic sensing is to be performed based on the data frame in the next DTI. After the current or next DTI ends, the PCP or AP may request, from the PCP or the AP, the first sensing result of performed monostatic sensing. The first frame structure may alternatively be a BRP in a current or next DTI. That is, the STA announces that monostatic sensing is being performed based on the BRP in the current DTI, or monostatic sensing is to be performed based on the BRP in the next DTI. After the current or next DTI ends, the PCP or the AP may request, from the STA, the first sensing result of performed monostatic sensing.

It should be noted that, to interpret the first sensing result, the second device may further request, from the first device, the target beam information for sending the first frame structure and the information about the target location of the first device for sending the first frame structure.

In this possible implementation, the second device may perform passive sensing, or may not perform passive sensing, that is, monostatic sensing is not bound to passive sensing. In this way, flexibility of a monostatic sensing manner is improved.

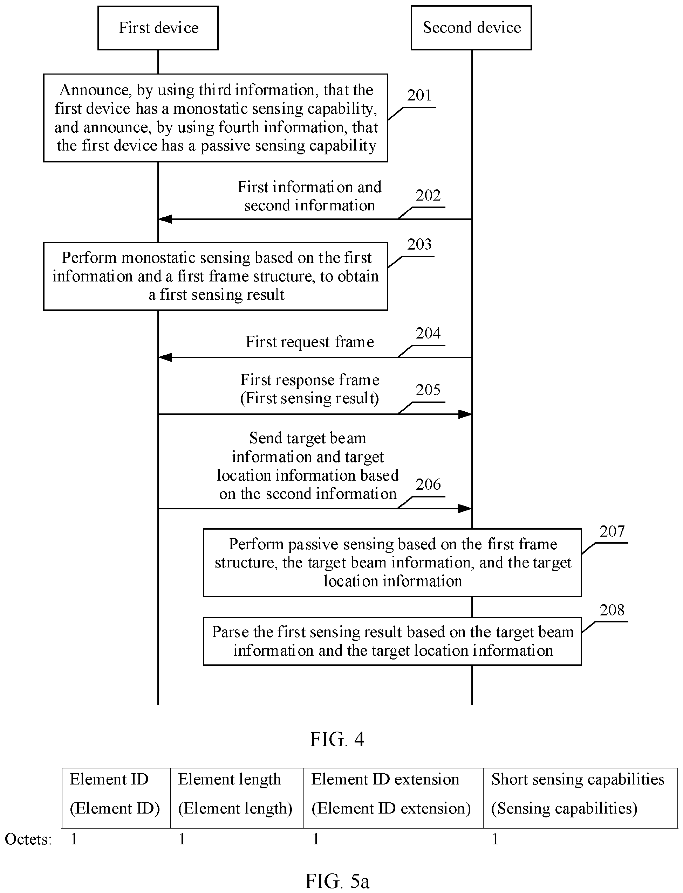

FIG. 4 is a flowchart diagram of another monostatic sensing method according to an embodiment of this application. A method procedure in FIG. 4 is a possible implementation of the method in FIG. 3. As shown in FIG. 4, the method includes the following steps.

201: The first device announces, by using third information, that the first device has a monostatic sensing capability, and announces, by using fourth information, that the first device has a passive sensing capability.

In some implementations, the first device sends the third information and the fourth information, where the third information is used to announce that the first device has the monostatic sensing capability, or the third information indicates that the first device supports monostatic sensing. The fourth information is used to announce that the first device has the passive sensing capability, or the fourth information indicates that the first device supports passive sensing, and another device may request sending beam information and location information from the first device. The first device may send the third information and the fourth information through broadcasting, multicasting, or unicasting. Correspondingly, the second device receives the third information and the fourth information.

The third information and the fourth information may be included in a second frame structure. Optionally, the third information and the fourth information may be included in a capability element field of the second frame structure, for example, a DMG short sensing capability element field.

**In a first optional implementation,** the first device is the PCP/AP, and the PCP/AP performs monostatic sensing based on the beacon frame or the BRP, that is, the first frame structure is the DMG beacon frame or the BRP.

In the DMG short sensing capability element field of the second frame structure, the PCP/AP may announce that the PCP/AP has the monostatic sensing capability. Optionally, the second frame structure may be an association request frame (Association Request Frame), an association response frame (Association Response Frame), a reassociation request frame (Reassociation Request Frame), a reassociation response frame (Reassociation Response Frame), a DMG beacon frame, an information request frame (Information Request Frame), an information response frame (Information Response Frame), a probe request (Probe Request) frame, a probe response (Probe Response) frame, or the like.

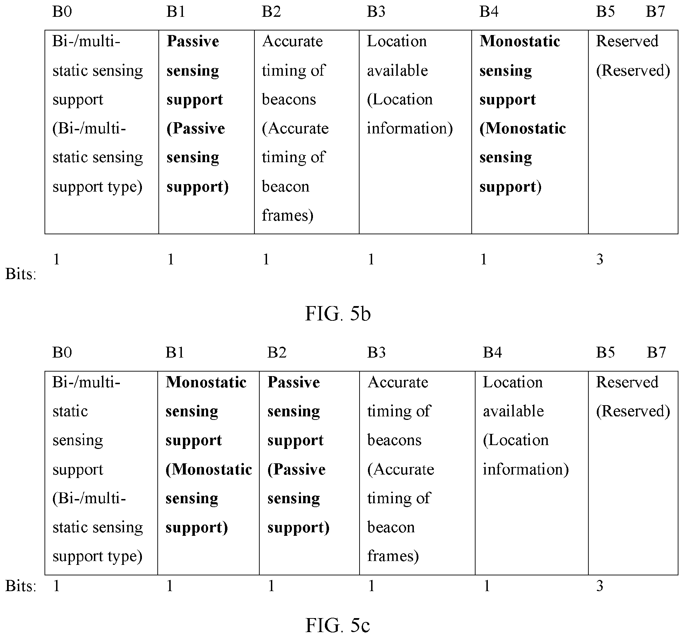

A structure of the DMG sensing short capabilities element field may have a structure shown in FIG. 5a. The third information and the fourth information may be included in a short sensing capabilities field in the DMG sensing short capabilities element field. FIG. 5b and FIG. 5c are diagrams of structures of two optional short sensing capabilities fields. In the structure, a monostatic sensing support subfield carries the third information, in other words, the third information is included in the monostatic sensing support subfield. A passive sensing support subfield carries the fourth information, in other words, the fourth information is included in the passive sensing support subfield.

In this embodiment of this application, the monostatic sensing support subfield is added to the short sensing capabilities field for determining whether the AP supports monostatic sensing. If passive sensing support is 1 and monostatic sensing support is 1, the bit combination indicates that the AP supports beacon passive sensing and may provide a beacon-based monostatic sensing result. It may be understood that, after the monostatic sensing support subfield is added, a sensing support field in the short sensing capabilities field indicates that any sensing mode other than passive sensing and monostatic sensing is supported.

**In a second optional implementation,** the first device is the PCP/AP, and the PCP/AP performs monostatic sensing based on the data frame, that is, the first frame structure is the data frame.

In a possible implementation, in the DMG short sensing capability element field of the second frame structure, the PCP/AP may announce that the PCP/AP has the monostatic sensing capability. Optionally, the second frame structure may be an association request frame (Association Request Frame), an association response frame (Association Response Frame), a reassociation request frame (Reassociation Request Frame), a reassociation response frame (Reassociation Response Frame), a DMG beacon frame, an information request frame (Information Request Frame), an information response frame (Information Response Frame), a data frame, a probe request (Probe Request) frame, a probe response (Probe Response) frame, or the like. To be specific, optionally, the third information and the fourth information may be included in a short sensing capabilities field in the DMG short sensing capability element. For details, refer to the first optional implementation.

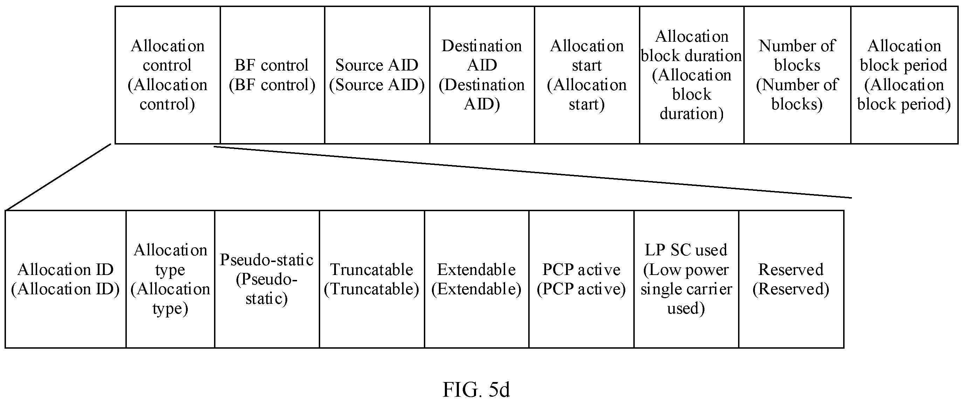

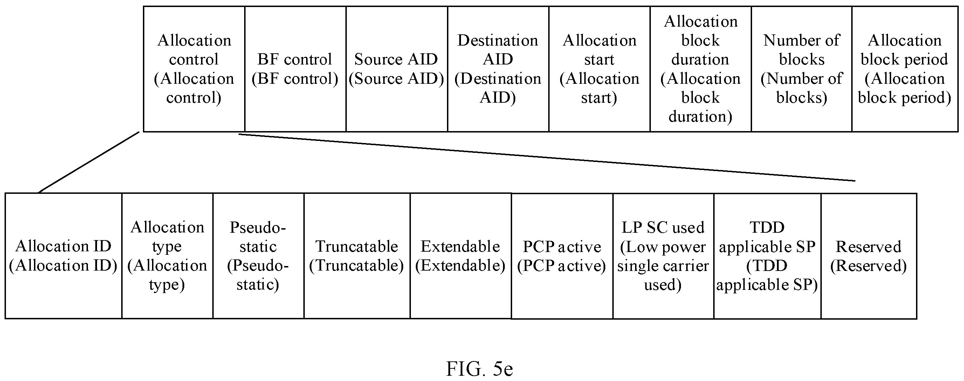

In another possible implementation, at least one bit may be further used in an allocation field corresponding to an extended schedule element of a DMG beacon frame, to indicate that the allocation is used for/supports passive sensing and monostatic sensing. That is, the second frame structure is the DMG beacon frame. FIG. 5d and FIG. 5e are diagrams of two structures of the allocation field. As shown in the figure, a reserved bit in an allocation control subfield may be used to carry the third information and the fourth information. It may be understood that the PCP/AP may also announce, by using the DMG short sensing capability element, that the PCP/AP supports passive sensing, and indicate, by using the bit in the allocation field corresponding to the extended schedule element of the beacon, that the allocation supports monostatic sensing.

In a possible implementation, at least one bit may alternatively be added to the data frame to indicate that the PCP/AP supports passive sensing and monostatic sensing, or indicate that the PCP/AP has the passive sensing capability and the monostatic sensing capability. That is, the second frame structure is the data frame. For example, any at least one reserved bit in a PHY header or a MAC header may be used to carry the third information and the fourth information. It may be understood that the PCP/AP may also announce, by using the DMG short sensing capability element, that the PCP/AP supports passive sensing, and indicate, by using the one bit added to the data frame, that the PCP/AP supports monostatic sensing.

**In a third optional implementation,** the first device is the STA, and the STA performs monostatic sensing based on the SSW, the short SSW, or the BRP. In other words, the first frame structure is the SSW, the short SSW, or the BRP.

In the DMG short sensing capability element field of the second frame structure, the STA may announce that the STA has the monostatic sensing capability, or announce that the STA supports monostatic sensing. Optionally, the second frame structure may be an association request frame (Association Request Frame), an association response frame (Association Response Frame), a reassociation request frame (Reassociation Request Frame), a reassociation response frame (Reassociation Response Frame), an information request frame (Information Request Frame), an information response frame (Information Response Frame), an SSW frame, a short SSW frame, a probe request (Probe Request) frame, a probe response (Probe Response) frame, or the like.

A structure of the DMG sensing short capabilities element field may have a structure shown in FIG. 5a. The third information and the fourth information may be included in a short sensing capabilities field in the DMG sensing short capabilities element field. FIG. 5b and FIG. 5c are diagrams of structures of two optional short sensing capabilities fields. In the structure, a monostatic sensing support subfield carries the third information, in other words, the third information is included in the monostatic sensing support subfield. A passive sensing support subfield carries the fourth information, in other words, the fourth information is included in the passive sensing support subfield. For details, refer to specific descriptions of the first optional implementation. Details are not described herein again. It should be noted that, if the device is the STA, passive sensing support is 1, and monostatic sensing support is 1, the bit combination indicates that the STA supports passive sensing and may provide a monostatic sensing result.

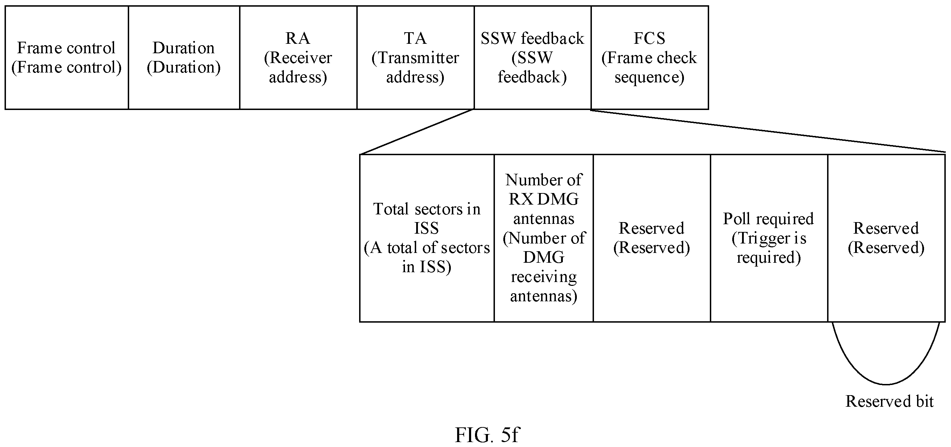

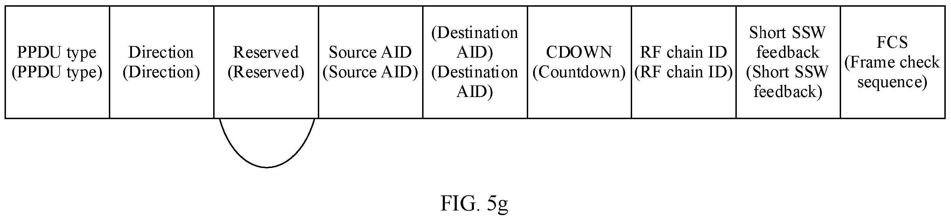

Optionally, the STA may send the SSW or the short SSW in an A-BFT process, and may use a reserved bit in the SSW or the short SSW to indicate that the STA supports monostatic sensing, or indicate that the STA has the monostatic sensing capability. FIG. 5f is a diagram of a structure of the SSW according to this application. The reserved bit in an SSW feedback field of the SSW may indicate that the STA supports monostatic sensing, or indicate that the STA has the monostatic sensing capability. FIG. 5g is a diagram of a structure of the short SSW according to this application. The reserved bit in the short SSW may indicate that the STA supports monostatic sensing, or indicate that the STA has the monostatic sensing capability. In other words, the reserved bit in the SSW or the short SSW is used to carry or represent the third information.

**In a fourth optional implementation,** the first device is the STA, and the STA performs monostatic sensing based on the data frame, that is, the first frame structure is the data frame.

In a possible implementation, in the DMG short sensing capability element field of the second frame structure, the STA may announce that the STA has the monostatic sensing capability. Optionally, the second frame structure may be an association request frame (Association Request Frame), an association response frame (Association Response Frame), a reassociation request frame (Reassociation Request Frame), a reassociation response frame (Reassociation Response Frame), an information request frame (Information Request Frame), an information response frame (Information Response Frame), an SSW frame, a short SSW frame, a probe request (Probe Request) frame, a probe response (Probe Response) frame, a data frame, or the like. To be specific, optionally, the third information and the fourth information may be included in a short sensing capabilities field in the DMG short sensing capability element. For details, refer to the first optional implementation. It should be noted that, if the device is the STA, passive sensing support is 1, and monostatic sensing support is 1, the bit combination indicates that the STA supports passive sensing and may provide a monostatic sensing result.

Optionally, the STA may send the SSW frame or the short SSW frame in an A-BFT process, and may use a reserved bit in the SSW frame or the short SSW frame to indicate that the STA supports monostatic sensing, or indicate that the STA has the monostatic sensing capability. FIG. 5f is a diagram of a structure of the SSW according to this application. The reserved bit in an SSW feedback field of the SSW may indicate that the STA supports monostatic sensing, or indicate that the STA has the monostatic sensing capability. FIG. 5g is a diagram of a structure of the short SSW according to this application. The reserved bit in the short SSW may indicate that the STA supports monostatic sensing, or indicate that the STA has the monostatic sensing capability.

In a possible implementation, at least one bit may be added to the data frame to indicate that the STA supports passive sensing and monostatic sensing, or indicate that the STA has the passive sensing capability and the monostatic sensing capability. That is, the second frame structure is the data frame. For example, any at least one reserved bit in a PHY header or a MAC header may be used to carry the third information and the fourth information. It may be understood that the STA may also announce, by using the DMG short sensing capability element, that the STA supports passive sensing, and indicate, by using the one bit added to the data frame, that the STA supports monostatic sensing.

202: The second device sends first information and second information to the first device, where the first information is used to request the first device to perform monostatic sensing, the second information is used to request to obtain the target beam information and the target location information, the target beam information is beam information for sending the first frame structure by the first device, and the target location information is the information about the location of the first device for sending the first frame structure. Correspondingly, the first device receives the first information and the second information.

203: The first device performs monostatic sensing based on the first information and the first frame structure, to obtain the first sensing result.

204: The second device sends the first request frame to the first device, where the first request frame is used to request to obtain the monostatic sensing result, and correspondingly, the first device receives the first request frame.

205: The first device sends the first response frame to the second device, where the first response frame includes the first sensing result. Correspondingly, the second device receives the first response frame.

206: The first device sends the target beam information and the target location information based on the second information.

207: The second device performs passive sensing based on the first frame structure, the target beam information, and the target location information.

208: The second device parses the first sensing result based on the target beam information and the target location information.

In some embodiments, the second device parses related information in the second frame structure, for example, the third information and the fourth information. The second device determines, by using the third information, that the first device supports monostatic sensing. The second device may request, by using the first information, the first device to perform monostatic sensing. The second device determines, by using the fourth information, that the first device supports passive sensing, and the second device may request the target beam information and the target location information from the first device by using the second information. It may be understood that, to help the second device parse the monostatic sensing result of the first device, the second device also needs to request the target beam information and the target location information from the first device.

For example, the first information and the second information may be included in an information requestt frame. For example, the first information and the second information are separately included in different elements of the information request frame, or the first information and the second information may be included in a passive sensing information element (for example, a DMG passive sensing beacon info element/DMG passive sensing SSW info element/DMG passive sensing short SSW info element/DMG passive sensing info element) of the information request frame, or the first information and the second information may be separately included in different request frames. For example, the second information is included in an information request frame, and the first information is included in another request frame (for example, a DMG sensing measurement setup request/DMG sensing measurement instance request/DMG sensing request). This is not limited in this application.

To be specific, optionally, the second device sends the information request frame to the first device, to request the target location information of the first device (including the information about the orientation posture for sending the first frame structure) and the target beam information (including information such as the horizontal beam direction, the vertical direction, the horizontal beam width, the vertical beam width, and the beam gain) for sending the first frame structure by the first device, to perform passive sensing based on the first frame structure subsequently sent by the first device. In addition, the second device may request the first device to perform monostatic sensing based on the first frame structure when the first device subsequently sends the first frame structure. After sensing is completed, the second device may request, from the first device, the first sensing result of monostatic sensing based on the first frame structure. It may be understood that the target location information of the first device and the target beam information for sending the first frame structure that are requested by the second device may also be used to interpret or parse the first sensing result.

For example, the first device is the AP or the PCP, the second device is the STA, and the first frame structure is a beacon. The STA may request, by using a DMG passive sensing beacon info element included in the information request frame, the AP to send information such as target beam information for the beacon and target location information of the AP. The AP sends the information response frame to the STA, where the information response frame includes a DMG passive sensing beacon info element (describing a sending time of the beacon, the location of the AP, and other information) and one or more DMG beacon sector descriptors elements (describing beam information for beacon sending and the like).

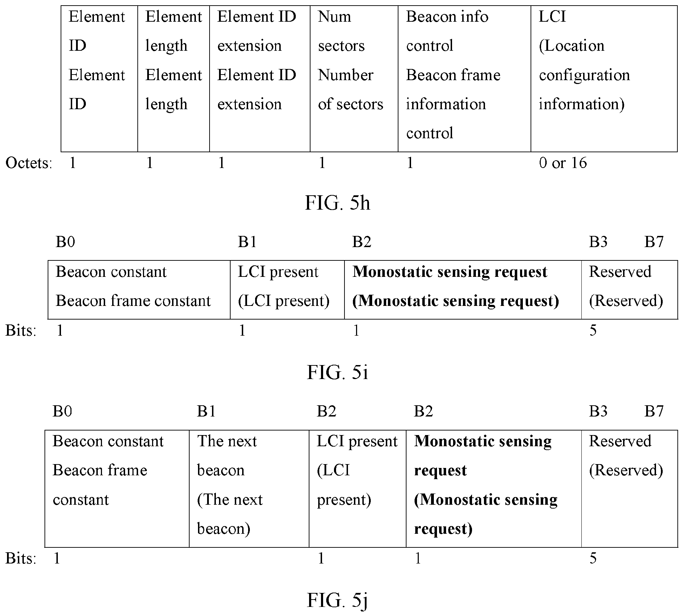

In embodiments of this application, the first information used to request the AP to perform monostatic sensing may be included in the DMG passive sensing beacon info element of the information request frame. In other words, the DMG passive sensing beacon info element additionally includes indication information (that is, the first information) to request the AP to perform monostatic sensing based on the beacon. FIG. 5h is a diagram of a structure of the DMG passive sensing beacon info element. The first information in this application may be included in a beacon info control field, or may be included in another field of the DMG passive sensing beacon info element. For example, FIG. 5i is a diagram of a possible structure of a beacon info control field. A monostatic sensing request bit is added to the beacon info control field to request the AP to perform monostatic sensing. That is, the monostatic sensing request includes the first information, where the first information is carried in the monostatic sensing request bit. For example, FIG. 5j is a diagram of another possible structure of a beacon info control field. Compared with that in FIG. 5i, the beacon info control field in FIG. 5j includes a "the next beacon" field. The field indicates that the target beam information subsequently sent by the AP is used to describe a beacon in a current BTI or a beacon in a next BTI. It may be understood that a monostatic sensing request bit in FIG. 5j is also used to request the AP to perform monostatic sensing. To be specific, the monostatic sensing request bit includes the first information, and the first information is carried in the monostatic sensing request bit.

The STA requests, by using the information request frame, the target location information of the AP and related information of a target beam for sending the beacon, and requests, in the information request frame, the AP to perform monostatic sensing based on the beacon.

In this case, based on the target location information and the related information of the target beam for sending the beacon that are sent by the AP, the STA performs passive sensing by using the beacon sent by the AP, and the AP performs monostatic sensing based on the beacon at the request of the STA. Subsequently, the STA may request, from the AP, a beacon-based monostatic sensing result, that is, the first sensing result. The AP feeds back the first sensing result by using the first response frame. After receiving the first sensing result, the STA performs analysis in combination with a passive sensing result.

Optionally, the monostatic sensing request bit used to carry the first information may alternatively be included in a new element. In this case, the information request frame includes two elements. One element requests information related to passive sensing (that is, the DMG passive sensing beacon info element), and the other element requests monostatic sensing.

It should be noted that the requesting the target beam information and the target location information and the requesting the AP to perform monostatic sensing may be implemented separately by using two frames. To be specific, the information request/response is used to exchange the sending beam information for the beacon and the target location information of the AP, and the STA requests, by using another request frame (for example, the DMG sensing measurement setup request/DMG sensing measurement instance request/DMG sensing request), the AP to perform monostatic sensing based on the beacon. Correspondingly, the AP feeds back a monostatic sensing result based on a response frame corresponding to the another request frame. It may be understood that if the first frame structure is the BRP, the beacon in the foregoing interaction procedure may be replaced with the BRP.

Similarly, a monostatic sensing device is a STA, that is, the first device is the STA, and the second device is the AP or the PCP. A corresponding procedure may be used to complete interaction of related information request and feedback. It may be understood that when the monostatic sensing device is the STA, the information request/response frame includes a corresponding DMG passive sensing (SSW/Short SSW/BRP) info element. Correspondingly, information in the element is mainly used to describe information about the SSW/Short SSW/BRP sent by the STA in A-BFT. A monostatic sensing request bit may be added to the DMG passive sensing (SSW/Short SSW/BRP) info element to request the STA to perform monostatic sensing. The bit may be located in an (SSW/Short SSW/BRP) info control field. Alternatively, the information request frame may include the DMG passive sensing (SSW/Short SSW/BRP) info element and another element, and the another element includes the monostatic sensing request bit and is used to request the STA to perform monostatic sensing. Alternatively, the information request frame may be used to request the STA to send target beam information for the SSW/Short SSWBRP and target location information of the STA, and the AP requests, by using another request frame (for example, a DMG sensing measurement setup request/DMG sensing measurement instance request/DMG sensing request), the STA to perform monostatic sensing based on (SSW/Short SSWBRP).

It may be understood that if the PCP/AP or the STA performs monostatic sensing and passive sensing based on the data frame, the information request/response frame includes a corresponding DMG passive sensing (data PPDU) info element. Correspondingly, information in the element is mainly used to describe related information of a data frame data PPDU sent by the PCP/AP or the STA. For a specific interaction procedure, refer to descriptions in the foregoing embodiments. Details are not described herein again.

The target beam information for the first frame structure and the information about the target location of the first device for sending the first frame structure that are sent by the first device to the second device may be used to simultaneously interpret results of both passive sensing and monostatic sensing. This improves sensing efficiency, and reduces overheads for exchanging the location information and the beam sending information. In addition, simultaneous passive sensing and monostatic sensing based on a same beacon/SSW/Short SSW/data frame are implemented. In this way, sensing diversity gains at a same moment are increased. Compared with performance of independent sensing, sensing performance can be improved.

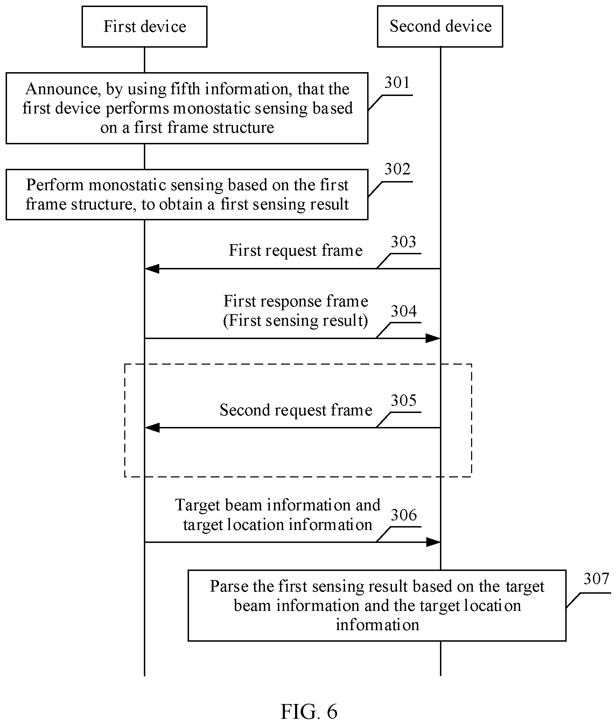

FIG. 6 is a flowchart diagram of still another monostatic sensing method according to an embodiment of this application. A method procedure in FIG. 6 is a possible implementation of the method in FIG. 3. As shown in FIG. 6, the method includes the following steps.

301: The first device announces, by using fifth information, that the first device performs monostatic sensing based on the first frame structure.

302: The first device performs monostatic sensing based on the first frame structure, to obtain the first sensing result.

303: The second device sends the first request frame to the first device, where the first request frame is used to request to obtain the monostatic sensing result.

304: The first device sends the first response frame to the second device, where the first response frame includes the first sensing result.

Optionally, the method may further include step 305.

305: The second device sends a second request frame to the first device, where the second request frame is used to request to obtain the target beam information and the target location information.

306: The first device sends the target beam information and the target location information to the second device, where the target beam information is the beam information for sending the first frame structure by the first device, and the target location information is the information about the location of the first device for sending the first frame structure.

307: The second device parses the first sensing result based on the target beam information and the target location information.

In some implementations, the first device sends the fifth information, where the fifth information is used to announce that the first device is to perform monostatic sensing based on the first frame structure, or the fifth information is used to announce that the first device is performing monostatic sensing based on the first frame structure. The first device may send the fifth information through broadcasting, multicasting, or unicasting. Correspondingly, the second device receives the fifth information.

For example, if the first device is the PCP or the AP, the first frame structure may be a DMG beacon frame in a current or next BTI, and the PCP or the AP announces, by using the fifth information, that the PCP or the AP is performing monostatic sensing based on the beacon in the current BTI, or the PCP or the AP announces, by using the fifth information, that the PCP or the AP is to perform monostatic sensing based on the beacon in the next BTI. After the corresponding BTI ends, the STA may request the first sensing result of monostatic sensing from the PCP or the AP. To parse the first sensing result, the STA may also request, from the PCP or the AP, target beam information for sending the beacon by the PCP or the AP and information about a target location of the PCP or the AP for sending the beacon in the process of monostatic sensing.

For example, if the first device is the PCP or the AP, the first frame structure may be a data frame in a current or next DTI, and the PCP or the AP announces, by using the fifth information, that the PCP or the AP is performing monostatic sensing based on the data frame in the current DTI, or the PCP or the AP announces, by using the fifth information, that the PCP or the AP is to perform monostatic sensing based on the data frame in the next DTI. After the corresponding DTI ends, the STA may request the first sensing result of monostatic sensing from the PCP or the AP. To parse the first sensing result, the STA may also request, from the PCP or the AP, target beam information for sending the data frame by the PCP or the AP and information about a target location of the PCP or the AP for sending the data frame in the process of monostatic sensing.

For example, if the first device is the PCP or the AP, the first frame structure may be a BRP in a current or next DTI, and the PCP or the AP announces, by using the fifth information, that the PCP or the AP is performing monostatic sensing based on the BRP in the current DTI, or the PCP or the AP announces, by using the fifth information, that the PCP or the AP is to perform monostatic sensing based on the BRP in the next DTI. After the corresponding A-BFT ends, the STA may request the first sensing result of monostatic sensing from the PCP or the AP. To parse the first sensing result, the STA may also request, from the PCP or the AP, target beam information for sending the BRP by the PCP or the AP and information about a target location of the PCP or the AP for sending the BRP in the process of monostatic sensing.

For example, if the first device is the STA, the first frame structure may be an SSW or a short SSW in current or next A-BFT, and the STA announces, by using the fifth information, that the STA is performing monostatic sensing based on the SSW/short SSW in the current A-BFT, or the STA announces, by using the fifth information, that the STA is to perform monostatic sensing based on the SSW/short SSW in the nextA-BFT. After the corresponding A-BFT ends, the AP may request, from the STA, the first sensing result of monostatic sensing performed by the STA. To parse the first sensing result, the AP may also request, from the STA, target beam information for sending the SSW/Short SSW by the STA and information about a target location of the STA for sending the SSW/Short SSW in the process of monostatic sensing.

For example, if the first device is the STA, the first frame structure is a data frame in a current or next DTI, and the STA announces, by using the fifth information, that the STA is performing monostatic sensing based on the data frame in the current DTI, or the STA announces, by using the fifth information, that the STA is to perform monostatic sensing based on the SSW/short SSW in the next A-BFT. After the corresponding DTI ends, the AP may request, from the STA, the first sensing result of monostatic sensing performed by the STA. To parse the first sensing result, the AP may also request, from the STA, target beam information for sending the data frame by the STA and information about a target location of the STA for sending the data frame in the process of monostatic sensing.

For example, if the first device is the STA, the first frame structure is a BRP in a current or next DTI, and the STA announces, by using the fifth information, that the STA is performing monostatic sensing based on the BRP in the current DTI, or the STA announces, by using the fifth information, that the STA is to perform monostatic sensing based on the BRP in the next DTI. After the corresponding DTI ends, the AP may request, from the STA, the first sensing result of monostatic sensing performed by the STA. To parse the first sensing result, the AP may also request, from the STA, target beam information for sending the BRP by the STA and information about a target location of the STA for sending the data frame in the process of monostatic sensing.

The second device may request, by using the first request frame, to obtain the monostatic sensing result from the first device, and the first device sends the first sensing result of monostatic sensing to the second device by using the first response frame. Optionally, the first request frame is further used to request to obtain the target beam information and the target location information. For example, the first request frame may be an information request frame. Optionally, the first request frame may be used to request to obtain the monostatic sensing result, and the second device requests, by using the second request frame, to obtain the target beam information and the target location information. For example, the first request frame may be a DMG sensing poll frame, and the second request frame may be an information request frame. Further, the second device parses the first sensing result of the first device based on the obtained target beam information and the obtained target location information.

In some optional manners, the fifth information may be included in a third frame structure. If the first device is the PCP or the AP, the third frame structure is one or more of the following: an association request frame, an association response frame, a reassociation request frame, a reassociation response frame, a DMG beacon frame, an information request frame, an information response frame, a probe request (Probe Request) frame, a probe response (Probe Response) frame, a data frame, or the like. If the first device is the STA, the third frame structure is one or more of the following: an association request frame, an association response frame, a reassociation request frame, a reassociation response frame, an information request frame, an information response frame, a probe request (Probe Request) frame, a probe response (Probe Response) frame, an SSW frame, a short SSW frame, a data frame, or the like.

For example, the fifth information may be included in a capability element field of the third frame structure, for example, included in a DMG short sensing capability element field.

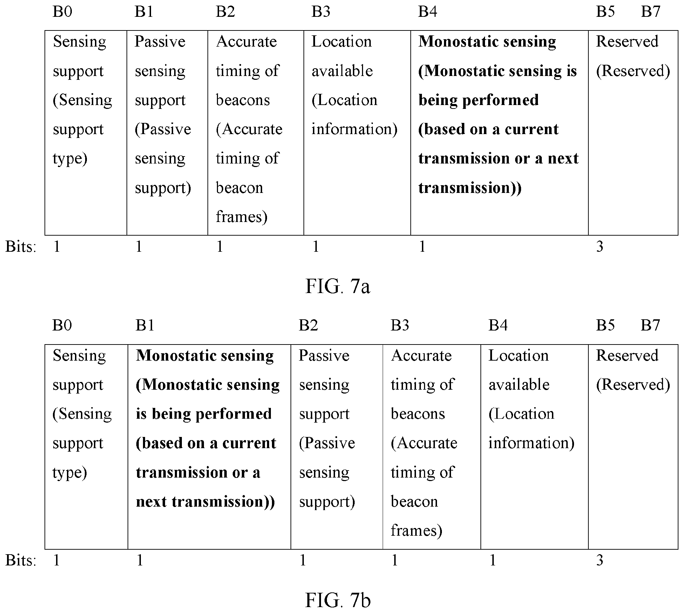

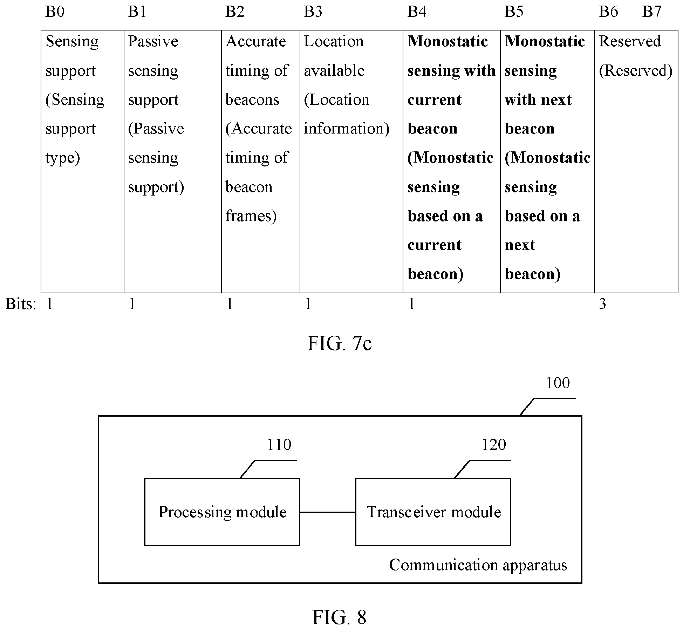

Optionally, the fifth information may be included in a short sensing capabilities field in the DMG short sensing capability element. FIG. 7a, FIG. 7b, and FIG. 7c are diagrams of structures of the short sensing capabilities field according to this application. As shown in FIG. 7a and FIG. 7b, a monostatic sensing field may be added to the short sensing capabilities field to carry the fifth information. That is, the monostatic sensing field indicates whether a related device is performing monostatic sensing based on a current transmission, or whether monostatic sensing is to be performed based on a next transmission. It may be understood that the monostatic sensing field may only indicate that the related device is performing monostatic sensing based on the current transmission, or the monostatic sensing field may only indicate that the related device is to perform monostatic sensing based on the next transmission. This is not limited in this application. Alternatively, the monostatic sensing field may indicate that the related device is performing monostatic sensing based on a current transmission or that the related device is to perform monostatic sensing based on a next transmission.

In some optional implementations, as shown in FIG. 7c, a first field (for example, monostatic sensing with current beacon) and a second field (for example, monostatic sensing with next beacon) may be further added to the short sensing capabilities field. The first field indicates that monostatic sensing is being performed based on a first frame structure in a current transmission (for example, a beacon in a current BTI, or an SSW or a Short SSW in currentA-BFT). The second field indicates that monostatic sensing is to be performed based on a first frame structure in a next transmission (for example, a beacon in a next BTI, or an SSW or a short SSW in next A-BFT). The fifth information is included in the first field or the second field.

It may be understood that, if the first device is the PCP/AP, the PCP/AP performs monostatic sensing based on the data frame, that is, the first frame structure is the data frame. In a possible design, the PCP/AP may announce, in the DMG short sensing capability element field of the third frame structure, that the PCP/AP is performing monostatic sensing based on a data frame in a current DTI, or is to perform monostatic sensing based on a data frame in a next DTI. The third frame structure may be an association request frame (Association Request Frame), an association response frame (Association Response Frame), a reassociation request frame (Reassociation Request Frame), a reassociation response frame (Reassociation Response Frame), a beacon frame, an information request frame (Information Request Frame), an information response frame (Information Response Frame), a data frame, a probe request (Probe Request) frame, a probe response (Probe Response) frame, or the like. For details, refer to descriptions in the foregoing embodiments. The details are not described herein again. In another possible implementation, the PCP/AP may also use at least one bit in an allocation field corresponding to an extended schedule element of a DMG beacon frame, to indicate that the allocation is performing monostatic sensing based on a data frame in a current DTI, or is to perform monostatic sensing based on a data frame in a next DTI. In still another possible implementation, the PCP/AP may also add at least one bit to the data frame to indicate that the PCP/AP is performing monostatic sensing based on a data frame in a current DTI, or is to perform monostatic sensing based on a data frame in a next DTI. For example, any at least one reserved bit in a PHY header or a MAC header may be used for indication.

It may be understood that, if the first device is the STA, the STA performs monostatic sensing based on the data frame, that is, the first frame structure is the data frame. In a possible design, the STA may announce, in the DMG short sensing capability element field of the third frame structure, that the STA is performing monostatic sensing based on a data frame in a current DTI, or is to perform monostatic sensing based on a data frame in a next DTI. The third frame structure may be an association request frame (Association Request Frame), an association response frame (Association Response Frame), a reassociation request frame (Reassociation Request Frame), a reassociation response frame (Reassociation Response Frame), an information request frame (Information Request Frame), a probe request (Probe Request) frame, a probe response (Probe Response) frame, an information response frame (Information Response Frame), an SSW frame, a short SSW frame, a data frame, or the like. For details, refer to descriptions in the foregoing embodiments. The details are not described herein again.

Optionally, the STA may use a reserved bit in an SSW frame or a short SSW sent in an A-BFT process to indicate that the STA is performing monostatic sensing based on a data frame in a current DTI, or is to perform monostatic sensing based on a data frame in a next DTI.

In a possible implementation, the STA may also add at least one bit to the data frame to indicate that the STA is performing monostatic sensing based on a data frame in a current DTI, or is to perform monostatic sensing based on a data frame in a next DTI. For example, any at least one reserved bit in a PHY header or a MAC header may be used for indication.

It may be understood that the technical solutions in this application are not only applicable to high frequencies, but also applicable to low frequencies. This is not limited in this application. Content of the technical solutions may also be cross-referenced.

A communication apparatus provided in an embodiment of this application is described below.

In this application, the communication apparatus is divided into functional modules based on the foregoing method embodiments. For example, division of the functional modules may be based on respective functions, or two or more functions may be integrated in one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 8 to FIG. 10.

FIG. 8 is a diagram of a structure of a communication apparatus 100 according to an embodiment of this application. The communication apparatus 100 may correspondingly implement functions or steps implemented by the communication apparatuses (for example, the first device and the second device) in the foregoing method embodiments. The communication apparatus may include a processing module 110 and a transceiver module 120. Optionally, a storage unit may be further included. The storage unit may be configured to store instructions (code or a program) and/or data. The processing module 110 and the transceiver module 120 may be coupled to the storage unit. For example, the processing module 110 may read the instructions (the code or the program) and/or the data in the storage unit, to implement a corresponding method. The foregoing units may be independently disposed, or may be partially or completely integrated. For example, the transceiver module 120 may further include a sending module and a receiving module. The sending module may be a transmitter, and the receiving module may be a receiver. An entity corresponding to the transceiver module 120 may be a transceiver.

In some possible implementations, the communication apparatus 100 can correspondingly implement the behavior and functions of the first device in the foregoing method embodiments. For example, the communication apparatus 100 may be a first device, or may be a component (for example, a chip or a circuit) applied to the first device. For example, the transceiver module 120 may be configured to perform all reception or sending operations performed by the first device in embodiments in FIG. 3, FIG. 4, and FIG. 6, for example, step 102 and step 103 in the embodiment shown in FIG. 3, steps 202, 204, 205, and 206 in the embodiment shown in FIG. 4, steps 303, 304, 305, and 306 in the embodiment shown in FIG. 6, and/or another process used to support the technologies described in this specification. The processing module 110 is configured to perform all operations other than sending and reception operations performed by the first device in embodiments in FIG. 3, FIG. 4, and FIG. 6, for example, step 101 in the embodiment shown in FIG. 3, steps 201 and 203 in the embodiment shown in FIG. 4, and steps 301 and 302 in the embodiment shown in FIG. 6.

In some possible implementations, the communication apparatus 100 can correspondingly implement the behavior and functions of the second device in the foregoing method embodiments. For example, the communication apparatus 100 may be the second device, or may be a component (for example, a chip or a circuit) applied to the second device. For example, the transceiver module 120 may be configured to perform all reception or sending operations performed by the second device in embodiments in FIG. 3, FIG. 4, and FIG. 6, for example, step 102 and step 103 in the embodiment shown in FIG. 3, steps 202, 204, 205, and 206 in the embodiment shown in FIG. 4, steps 303, 304, 305, and 306 in the embodiment shown in FIG. 6, and/or another process used to support the technologies described in this specification. The processing module 110 is configured to perform all operations other than sending and reception operations performed by the second device in embodiments in FIG. 3, FIG. 4, and FIG. 6, for example, steps 207 and 208 in the embodiment shown in FIG. 4 and step 307 in the embodiment shown in FIG. 6.

The first device and the second device in embodiments of this application are described above, and possible product forms of the first device and the second device are described below. It should be understood that any product in any form that has the function of the communication apparatus in FIG. 8 falls within the protection scope of embodiments of this application. It should be further understood that the following descriptions are merely examples, and product forms of the first device and the second device in embodiments of this application are not limited thereto.

In a possible implementation, in the communication apparatus shown in FIG. 8, the processing module 110 may be one or more processors, and the transceiver module 120 may be a transceiver, or the transceiver module 120 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connecting the processor and the transceiver is not limited in this embodiment of this application.

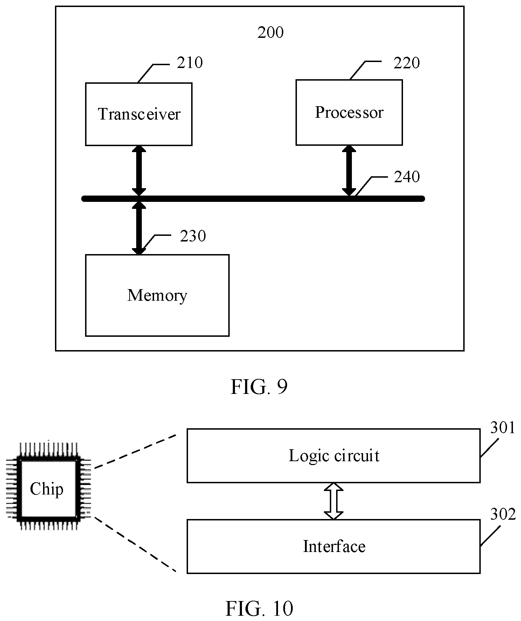

FIG. 9 is a diagram of a structure of another communication apparatus 200 according to an embodiment of this application. The communication apparatus in FIG. 9 may be the foregoing first device, or may be the foregoing second device.

As shown in FIG. 9, the communication apparatus 200 includes one or more processors 220 and transceivers 210. The transceiver 210 may implement a function of a transceiver module 120, and the processor 220 may implement a function of a processing module 110.

In each implementation of the communication apparatus shown in FIG. 9, the transceiver may include a receiver and a transmitter. The receiver is configured to perform a reception function (or operation), and the transmitter is configured to perform a transmitting function (or operation). The transceiver is configured to communicate with another device/apparatus through a transmission medium.

Optionally, the communication apparatus 200 may further include one or more memories 230, configured to store program instructions and/or data. The memory 230 is coupled to the processor 220. The coupling in this embodiment of this application may be indirect coupling or a communication connection between apparatuses, units, or modules in an electrical form, a mechanical form, or another form, and is used for information exchange between the apparatuses, the units, or the modules. The processor 220 may perform an operation in cooperation with the memory 230. The processor 220 may execute the program instructions stored in the memory 230.

A specific connection medium between the transceiver 210, the processor 220, and the memory 230 is not limited in this embodiment of this application. In this embodiment of this application, in FIG. 9, the memory 230, the processor 220, and the transceiver 210 are connected by using a bus 240. The bus is indicated by using a thick line in FIG. 9. A connection manner of other components is merely an example for description, and imposes no limitations. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, or may be any conventional processor or the like. The steps in the methods disclosed with reference to embodiments of this application may be directly performed by a hardware processor, or may be performed by a combination of hardware and a software module in the processor, and the like.

In this embodiment of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store program instructions and/or data.

The processor 220 is mainly configured to: process a communication protocol and communication data, control the entire communication apparatus, execute a software program, and process data of a software program. The memory 230 is mainly configured to store software program and data. The transceiver 210 may include a control circuit and an antenna. The control circuit is mainly configured to convert a baseband signal and a radio frequency signal and process a radio frequency signal. The antenna is mainly configured to receive and send a radio frequency signal in a form of an electromagnetic wave. An input/output apparatus, for example, a touchscreen, a display, or a keyboard, is mainly configured to receive data input by a user and output data to the user.

After the communication apparatus is powered on, the processor 220 can read a software program in the memory 230, interpret and execute instructions of the software program, and process data of the software program. When data needs to be sent wirelessly, after performing baseband processing on the to-be-sent data, the processor 220 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives the radio frequency signal through the antenna, converts the radio frequency signal into the baseband signal, and outputs the baseband signal to the processor 220. The processor 220 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those in FIG. 9. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 8, the processing module 110 may be one or more logic circuits, and the transceiver module 120 may be an input/output interface, which is also referred to as a communication interface, an interface circuit, an interface, or the like. Alternatively, the transceiver module 120 may be a sending unit and a receiving unit. The sending unit may be an output interface, and the receiving unit may be an input interface. The sending unit and the receiving unit are integrated into one unit, for example, an input/output interface. As shown in FIG. 10, the communication apparatus shown in FIG. 10 includes a logic circuit 301 and an interface 302. That is, the processing module 110 may be implemented by using the logic circuit 301, and the transceiver module 120 may be implemented by using the interface 302. The logic circuit 301 may be a chip, a processing circuit, an integrated circuit, a system on chip (system on chip, SoC), or the like. The interface 302 may be a communication interface, an input/output interface, a pin, or the like. FIG. 10 shows an example in which the communication apparatus is a chip. The chip includes a logic circuit 301 and an interface 302.

In this embodiment of this application, the logic circuit and the interface may be coupled to each other. A specific manner of connection between the logic circuit and the interface is not limited in this embodiment of this application.

For example, when the communication apparatus is configured to perform the method, the function, or the step performed by the first device, the logic circuit 301 is configured to perform monostatic sensing based on the first frame structure, to obtain a first sensing result. The interface 302 is configured to receive the first request frame, and send the first response frame to the second device.

For example, when the communication apparatus is configured to perform the method, the function, or the step performed by the second device, the interface 302 is configured to: send the first request frame to the first device and receive the first response frame sent by the first device, and the logic circuit 301 is configured to generate the first request frame.

It may be understood that the communication apparatus shown in embodiments of this application may implement the methods provided in embodiments of this application in a form of hardware, or may implement the methods provided in embodiments of this application in a form of software. This is not limited in embodiments of this application.

According to an embodiment of this application, a wireless communication system is further provided. The wireless communication system includes a first device and a second device. The first device and the second device may perform the methods in any of the foregoing embodiments (for example, FIG. 3, FIG. 4, and FIG. 6).

In addition, this application further provides a computer-readable storage medium. The computer-readable storage medium stores computer code. When the computer code is run on a computer, the computer is enabled to perform operations and/or processing performed by the first device in the methods provided in this application.

This application further provides a computer-readable storage medium. The computer-readable storage medium stores computer code. When the computer code is run on a computer, the computer is enabled to perform the operations and/or the processing performed by the second device in the methods provided in this application.

This application further provides a computer program product. The computer program product includes computer code or a computer program. When the computer code or the computer program is run on a computer, the operations and/or processing performed by the first device in the methods provided in this application is performed.

This application further provides a computer program product. The computer program product includes computer code or a computer program. When the computer code or the computer program is run on a computer, the operations and/or processing performed by the second device in the method provided in this application is performed.

In several embodiments provided in this application, it should be understood that the disclosed system, apparatus, and method may be implemented in other manners. For example, the described apparatus embodiment is merely an example. For example, division of the units is merely logical function division and may be other division in actual implementation. For example, a plurality of units or components may be combined or integrated into another system, or some features may be ignored or not performed. In addition, the displayed or discussed mutual coupling or direct coupling or a communication connection may be implemented through some interfaces, indirect coupling or a communication connection between apparatuses or units is implemented in an electrical form, a mechanical form, or another form

The units described as separate parts may or may not be physically separate, and parts displayed as units may or may not be physical units, may be located in one place, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A monostatic sensing method, applied to a first device and comprising:
performing monostatic sensing based on a first frame structure, to obtain a first sensing result;
receiving a first request frame sent by a second device, wherein the first request frame is used to request to obtain a monostatic sensing result; and
sending a first response frame to the second device based on the first request frame, wherein the first response frame comprises the first sensing result.

2. The method according to claim 1, wherein if the first device is a personal basic service set control point or an access point, the first frame structure comprises one of the following: a DMG beacon frame, a data frame, or a beam refinement protocol BRP; or
if the first device is a station, the first frame structure comprises one of the following: a sector sweep SSW, a short SSW, a BRP, or a data frame.

3. The method according to claim 1 or 2, wherein the method further comprises:
receiving first information and second information sent by the second device, wherein the first information is used to request the first device to perform monostatic sensing, the second information is used to request to obtain target beam information and target location information, the target beam information is beam information for sending the first frame structure by the first device, and the target location information is information about a location of the first device for sending the first frame structure;
sending the target beam information and the target location information to the second device based on the second information; and
the performing monostatic sensing based on a first frame structure, to obtain a first sensing result comprises:
performing monostatic sensing based on the first information and the first frame structure, to obtain the first sensing result.

4. The method according to claim 3, wherein the first information and the second information are separately comprised in different elements of an information request frame; or
the first information and the second information are separately comprised in different request frames; or
the first information and the second information are comprised in a passive sensing information element of an information request frame.

5. The method according to claim 3 or 4, wherein the method further comprises:
sending third information and fourth information, wherein the third information is used to announce that the first device has a monostatic sensing capability, and the fourth information is used to announce that the first device has a passive sensing capability.

6. The method according to claim 5, wherein the third information and the fourth information are comprised in a second frame structure; and
if the first device is the personal basic service set control point or the access point, the second frame structure is one or more of the following: an association request frame, an association response frame, a reassociation request frame, a reassociation response frame, a directional multigigabit DMG beacon frame, an information request frame, an information response frame, a probe request frame, a probe response frame, or a data frame; or
if the first device is the station, the second frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

7. The method according to claim 1 or 2, wherein the method further comprises:
sending fifth information, wherein the fifth information is used to announce that the first device performs monostatic sensing based on the first frame structure.

8. The method according to claim 7, wherein if the first device is the personal basic service set control point or the access point, the first frame structure is a DMG beacon frame in a current or next BTI, or the first frame structure is a data frame in a current or next DTI, or the first frame structure is a BRP in a current or next DTI; or
if the first device is the station, the first frame structure is an SSW or a short SSW in current or next A-BFT, or the first frame structure is a data frame in a current or next DTI, or the first frame structure is a BRP in a current or next DTI.

9. The method according to claim 7 or 8, wherein the fifth information is comprised in a third frame structure; and
if the first device is the personal basic service set control point or the access point, the third frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the third frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

10. The method according to any one of claims 7 to 9, wherein the first request frame is further used to request to obtain target beam information and target location information, the target beam information is beam information for sending the first frame structure by the first device, the target location information is information about a location of the first device for sending the first frame structure, and the method further comprises:
sending the target beam information and the target location information to the second device based on the first request frame.

11. The method according to any one of claims 7 to 9, wherein the method further comprises:
receiving a second request frame sent by the first device, wherein the second request frame is used to request to obtain target beam information and target location information, the target beam information is beam information for sending the first frame structure by the first device, and the target location information is information about a location of the first device for sending the first frame structure; and
sending the target beam information and the target location information to the second device based on the second request frame.

12. A monostatic sensing method, applied to a second device and comprising:
sending a first request frame to a first device, wherein the first request frame is used to request to obtain a monostatic sensing result; and
receiving a first response frame sent by the first device, wherein the first response frame comprises a first sensing result of monostatic sensing performed by the first device based on a first frame structure.

13. The method according to claim 12, wherein if the first device is a personal basic service set control point or an access point, the first frame structure comprises one of the following: a DMG beacon frame, a data frame, or a beam refinement protocol BRP; or
if the first device is a station, the first frame structure comprises one of the following: a sector sweep SSW, a short SSW, a BRP, or a data frame.

14. The method according to claim 12 or 13, wherein the method further comprises:
sending first information and second information to the first device, wherein the first information is used to request the first device to perform monostatic sensing, the second information is used to request to obtain target beam information and target location information, the target beam information is beam information for sending the first frame structure by the first device, and the target location information is information about a location of the first device for sending the first frame structure;
receiving the target beam information and the target location information that are sent by the first device;
performing passive sensing based on the first frame structure, the target beam information, and the target location information; and
parsing the first sensing result based on the target beam information and the target location information.

15. The method according to claim 14, wherein the method further comprises:
receiving third information and fourth information that are sent by the first device, wherein the third information is used to announce that the first device has a capability of monostatic sensing based on the first frame structure, and the fourth information is used to announce that the first device has a capability of passive sensing based on the first frame structure;
sending the first information to the first device based on the third information; and
sending the second information to the first device based on the third information and/or the fourth information.

16. The method according to claim 15, wherein the third information and the fourth information are comprised in a second frame structure; and
if the first device is the personal basic service set control point or the access point, the second frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the second frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

17. The method according to claim 12 or 13, wherein the method further comprises:
receiving fifth information sent by the first device, wherein the fifth information is used to announce that the first device performs monostatic sensing based on the first frame structure; and
the sending a first request frame to a first device comprises:
sending the first request frame to the first device based on the fifth information.

18. The method according to claim 17, wherein if the first device is the personal basic service set control point or the access point, the first frame structure is a DMG beacon frame in a current or next BTI, or the first frame structure is a data frame in a current or next DTI, or the first frame structure is a BRP in a current or next DTI; or
if the first device is the station, the first frame structure is an SSW or a short SSW in current or next A-BFT, or the first frame structure is a data frame in a current or next DTI, or the first frame structure is a BRP in a current or next DTI.

19. The method according to claim 17 or 18, wherein the fifth information is comprised in a third frame structure; and
if the first device is the personal basic service set control point or the access point, the third frame structure is one or more of the following: an association request frame, an association response frame, a reassociation request frame, a reassociation response frame, a DMG beacon frame, an information request frame, an information response frame, a probe request frame, a probe response frame, or a data frame; or
if the first device is the station, the third frame structure is one or more of the following: an association request frame, an association response frame, a reassociation request frame, a reassociation response frame, an information request frame, an information response frame, a probe request frame, a probe response frame, an SSW frame, a short SSW frame, or a data frame.

20. The method according to any one of claims 17 to 19, wherein the first request frame is further used to request to obtain target beam information and target location information, the target beam information is beam information for sending the first frame structure by the first device, the target location information is information about a location of the first device for sending the first frame structure, and the method further comprises:
receiving the target beam information and the target location information that are sent by the first device; and
parsing the first sensing result based on the target beam information and the target location information.

21. The method according to any one of claims 17 to 19, wherein the method further comprises:
sending a second request frame to the first device, wherein the second request frame is used to request to obtain target beam information and target location information, the target beam information is beam information for sending the first frame structure by the first device, and the target location information is information about a location of the first device for sending the first frame structure;
receiving the target beam information and the target location information that are sent by the first device; and
parsing the first sensing result based on the target beam information and the target location information.

22. A communication apparatus, comprising:
a processing module, configured to perform monostatic sensing based on a first frame structure, to obtain a first sensing result; and
a transceiver module, configured to receive a first request frame sent by a second device, wherein the first request frame is used to request to obtain a monostatic sensing result, wherein
the transceiver module is further configured to send a first response frame to the second device based on the first request frame, wherein the first response frame comprises the first sensing result.

23. A communication apparatus, comprising:
a processing module, configured to generate a first request frame, wherein the first request frame is used to request to obtain a monostatic sensing result; and
a transceiver module, configured to send the first request frame to the first device, wherein the first request frame is used to request to obtain the monostatic sensing result, wherein
the transceiver module is further configured to receive a first response frame sent by the first device, wherein the first response frame comprises a first sensing result of monostatic sensing performed by the first device based on a first frame structure.

24. A computer-readable storage medium, wherein the computer-readable storage medium stores a computer program, wherein the computer program comprises program instructions, and when the program instructions are executed by a processor, the processor is enabled to perform the method according to any one of claims 1 to 11, or the processor is enabled to perform the method according to any one of claims 12 to 21.

25. A communication apparatus, comprising a processor and a memory, wherein
the memory is configured to store a computer program or instructions; and
the processor is configured to execute the computer program or the instructions in the memory, so that the method according to any one of claims 1 to 11 is performed, or the method according to any one of claims 12 to 21 is performed.
